# EUROPÄISCHE PATENTSCHRIFT

(11) **EP 2 617 947 B1**
(45) Veröffentlichungstag und Bekanntmachung des Hinweises auf die Patenterteilung: **31.07.2019**
(21) Anmeldenummer: 13000193.6
(22) Anmeldetag: 15.01.2013
(51) Int. Cl.: F01D 5/30, F02K 3/06, F01D 7/02

(54) **Fluggasturbine mit justierbarem Fan**
Aircraft gas turbine engine with adjustable fan
Turbine à gaz d'avion avec soufflante ajustable

(30) Priorität: 18.01.2012 DE 102012000889
(43) Veröffentlichungstag der Anmeldung: 24.07.2013
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Hoefer & Partner Patentanwälte mbB

(56) Entgegenhaltungen:
- DE-A1- 2 307 656
- GB-A- 2 051 966
- US-A- 4 037 986
- US-A1- 2009 285 686

## Beschreibung

Die Erfindung bezieht sich auf eine Fluggasturbine mit einem Fan, dessen Schaufeln/Blätter fein justierbar sind und insbesondere auf eine Fluggasturbine mit einem Fan, welcher in deren Einströmbereich angeordnet ist, wobei der Fan eine Nabe aufweist, an der mehrere Fanschaufeln gelagert sind.

Der Fan einer Fluggasturbine bildet einen ersten Verdichterbereich, durch welchen einströmende Luft verdichtet wird, welche nachfolgend einem Kerntriebwerk und einem Nebenstromkanal zugeführt wird.

Bei den aus dem Stand der Technik bekannten Konstruktionen sind die Blätter oder Schaufeln des Fans für einen bestimmten Triebwerkszustand (flight mode) optimiert (Anstellwinkel/pitch angle). In anderen Triebwerkssituationen ist der Wirkungsgrad des Fans hingegen nicht optimal. Diese Triebwerkszustände können beispielsweise die Startphase, die Reiseflugphase oder die Sinkflugphase sein.

Ferner zeigt die US 4 037 986 A einen Rotor mit im Anstellwinkel verstellbaren Rotorschaufeln.

Aus der GB 2 051 966 A ist ferner ein Fan mit Fanschaufeln mit variablem Anstellwinkel bekannt.

Die DE 23 07 656 A1 zeigt ferner eine Vorrichtung zur Verstellung des Anstellwinkels der Fanschaufeln von Turbinenstrahltriebwerke.

Die Optimierung der Schaufeln des Fans erfolgt durch eine Optimierung des Anstellwinkels. In einem nicht-optimierten Betriebszustand ist der Anstellwinkel üblicherweise größer und induziert mehr turbulente Strömung an bestimmten Bereichen der Fanschaufel. Hierdurch ergeben sich ungünstige Krafteinwirkungen auf die Fanschaufel, welche zu unerwünschten Vibrationen führen (flutter). Diese Schwingungen haben einen negativen Einfluss auf die Kraftübertragungskapazität des Materials der Fanschaufeln und verursachen unerwünschte Geräusche. Im Stand der Technik wurde versucht, dieser Thematik durch schwerere und steifere Fanschaufeln abzuhelfen. Dies wiederum führt zu der Notwendigkeit, auch die Nabe des Fans schwerer und stabiler auszubilden.

Die Möglichkeit, eine Fanschaufel ähnlich einem Propellerblatt oder einer Statorschaufel eines Verdichters um eine radiale Achse zu drehen, ist nur bedingt möglich, da die Fanschaufeln sehr dicht am Umfang der Nabe angeordnet sind und deshalb kein ausreichender Raum zur Verfügung steht.

Der Erfindung liegt die Aufgabe zugrunde, eine Fluggasturbine mit einem Fan zu schaffen, welcher unter Vermeidung der Nachteile des Standes der Technik eine Optimierung der Strömungsverhältnisse des Fans möglich ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass jede Fanschaufel mittels ihres Schaufelfußes an einem in Strömungsrichtung vorderen Bereich bewegbar an einer um die Triebwerksachse drehbaren Nabe gelagert ist. Eine weitere Lagerung der Fanschaufel erfolgt an einem in Strömungsrichtung hinteren Bereich. An diesem Bereich ist die Fanschaufel bewegbar an einer axial zur Triebwerksachse verstellbaren, drehfest mit der Nabe gelagerten Verstellscheibe gelagert. Die Fanschaufel weist somit zwei unterschiedliche Lagerbereiche auf, nämlich einen vorderen und einen hinteren Lagerbereich. Die vordere Lagerung der Fanschaufel ist axialfest, wobei die Fanschaufel sich zur Einstellung des Anstellwinkels geringfügig um eine radial zur Triebwerksachse angeordnete Achse drehen kann. Durch die Axialbewegung der Verstellscheibe, welche einen hinteren Bereich der Fanschaufel lagert, ist es möglich, die Fanschaufel zur Änderung des Anstellwinkels zu drehen.

Die Erfindung basiert somit auf dem Grundgedanken, mittels einer einfach zu realisierenden axialen Längsverschiebung der Verstellscheibe, sämtliche Fanschaufeln in ihrem Anstellwinkel zu verändern. Es versteht sich, dass die Lagerung der Fanschaufel an der Verstellscheibe so ausgebildet ist, dass eine Axialbewegung der Verstellscheibe möglich ist und dass diese Axialbewegung zu einer Drehung der Fanschaufel führt.

Um die Fanschaufel bei einer axialen Längsbewegung der Verstellscheibe drehen zu können, ist in bevorzugter Weiterbildung der Erfindung vorgesehen, dass die Nabe erste Führungsausnehmungen aufweist und dass die Verstellscheibe mit zweiten Führungsausnehmungen versehen ist. Durch eine geeignete Dimensionierung der Führungsausnehmungen, welche in günstiger Weiterbildung der Erfindung auch in Form von länglichen Führungsbahnen ausgebildet sein können, ist die Verdrehung der Fanschaufeln in einfacher Weise realisierbar.

Dabei hat es sich erfindungsgemäß gezeigt, dass bereits eine geringfügige Längsverschiebung der Verstellscheibe zu einer wirkungsvollen Einstellung der Fanschaufeln führt.

Somit ist es möglich, für unterschiedliche Flugbedingungen jeweils eine Optimierung des Fans mit einfachen Mitteln zu erreichen. Durch die Optimierung der Anstellung der Fanschaufeln ist es möglich, die Schwingungsprobleme, die bei den aus dem Stand der Technik bekannten Konstruktionen auftreten, zu eliminieren. Weiterhin ist es möglich, sowohl die Fanschaufeln als auch die Naben leichter auszubilden. Hierdurch verringert sich das Gesamtgewicht. Es ist somit möglich, über die gesamten Betriebszustände der Fluggasturbine (flight envelope) den Fan in optimaler Weise zu betreiben. Hieraus ergibt sich auch eine erhebliche Geräuschreduzierung, da unerwünschte Schwingungs- und Strömungszustände vermieden werden.

In besonders günstiger Weiterbildung der Erfindung ist vorgesehen, dass der Schaufelfuß ein in Strömungsrichtung vorderes erstes Lagerelement und ein in Strömungsrichtung hinten liegendes zweites Lagerelement umfasst, welche in den jeweiligen Führungsbahnen angeordnet sind. Besonders günstig ist es dabei, wenn die Lagerelemente im Wesentlichen in Form hinterschnittener Kugelköpfe ausgebildet sind und dass die Führungsbahnen in Form von hinterschnittenen Nuten oder in ähnlicher Weise ausgestaltet sind. Hierdurch erfolgt eine radiale Lagerung und Halterung der einzelnen Fanschaufeln.

Die Axialbewegung der Verstellscheibe wird in bevorzugter Ausgestaltung der Erfindung mittels einer Kolben-Zylinder-Anordnung erreicht. Diese Kolben-Zylinder-Anordnung kann durch zumindest ein Lager gebildet sein, welches mit einer Lagerölzufuhrleitung und einer oder mehreren Lagerölrückführleitungen verbunden ist. Somit ist es möglich, die üblicherweise vorhandenen Lagerölleitungen und das üblicherweise bereits bestehende Lager dazu zu verwenden, zusätzlich eine Verstellung der Fanschaufeln zu bewirken. Dabei ist es in besonders einfacher Weise möglich, die Lagerölrückführleitungen durch Absperrelemente oder Ventile zu steuern. Der Druck in der Lagerölzufuhrleitung bewirkt dabei eine Verschiebung des Lagers, welches als doppelt wirkender Kolben der Kolben-Zylinder-Anordnung wirkt. Zum einen ist hierdurch eine ausreichende Lagerschmierung gewährleistet, zum anderen kann das Öl im Sinne der Kolben-Zylinder-Anordnung zur Axialverschiebung der Verstellscheibe dienen.

Durch die erfindungsgemäße Lösung ist es somit möglich, die Betätigung der Verstellscheibe einfach und kostengünstig zu realisieren, ohne dass weitgehende Änderungen an dem Gasturbinentriebwerk als solchem vorgenommen werden müssten. Es ist lediglich erforderlich, den Nabenbereich des Fans umzugestalten und die Schaufelfüße entsprechend auszubilden. Durch geeignete Anstellung oder Dimensionierung oder Ausgestaltung der Verstellscheibe lässt sich erfindungsgemäß eine einfache und kostengünstige sowie sehr betriebssichere Einstellung der Fanschaufeln ermöglichen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Seitenansicht eines Ausführungsbeispiels eines Fans mit Darstellung des Anstellwinkels,
- Fig. 3: eine schematische Teil-Ansicht der erfindungsgemäßen Nabe und der zugehörigen Verstellscheibe,
- Fig. 4: eine vereinfachte perspektivische Schnittansicht eines ersten Ausführungsbeispiels der erfindungsgemäßen Anordnung,
- Fig. 5, 6: Schnittansichten, analog Fig. 4, zur Darstellung der Bewegungsrichtungen und Positionen der Verstellscheibe, und
- Fig. 7: eine Schnittansicht, analog den Fig. 5 und 6, eines weiteren Ausführungsbeispiels der Erfindung.

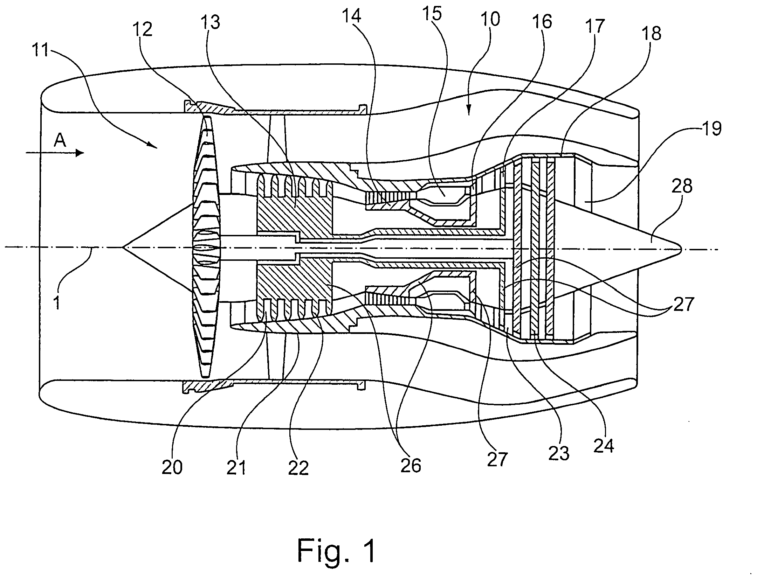

Fig. 1 zeigt eine schematische Darstellung eines Gasturbinentriebwerks gemäß der vorliegenden Erfindung.

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

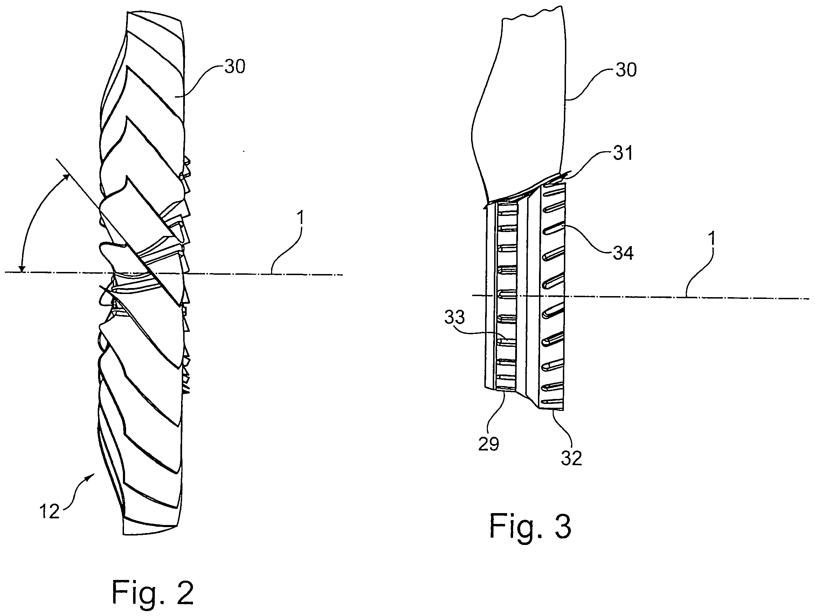

Die Fig. 2 zeigt eine Seitenansicht eines Fans 12 mit Fanschaufeln 30, wobei ein Anstellwinkel gezeigt ist, der, wie nachfolgend beschrieben werden wird, veränderbar ist. Der Anstellwinkel ist beispielsweise in einem Bereich von 46° bis 51° variierbar.

Die Fig. 3 zeigt eine Prinzipdarstellung der erfindungsgemäßen Lösung. Das Bezugszeichen 29 zeigt eine in Strömungsrichtung (die Anströmung erfolgt bei den Darstellungen der Figuren jeweils von links) vorne liegende Nabe 29, welche mit axialen ersten Führungsausnehmungen oder Führungsbahnen 33 versehen ist. In Strömungsrichtung hinter der Nabe 29 ist eine Verstellscheibe 32 angeordnet, welche mit zweiten Führungsausnehmungen oder Führungsbahnen 34 versehen ist, welche in einem Winkel zur Triebwerksachse 1 angeordnet sind. Ein Schaufelfuß 31 der Fanschaufel 30 ist an seinem vorderen Bereich der jeweiligen ersten Führungsausnehmung oder Führungsbahn 33 gelagert, während sein hinterer Bereich in der zweiten Führungsausnehmung/Führungsbahn 34 gelagert ist. Somit erfolgt bei axialer Verschiebung der Verstellscheibe 32 eine Drehung der Fanschaufel 30 um eine zur Triebwerksachse 1 senkrechte radiale Achse. Die Lage dieser radialen Schwenkachse liegt im Wesentlichen in der Ebene der Nabe 29, abhängig von der jeweiligen Detailkonstruktion.

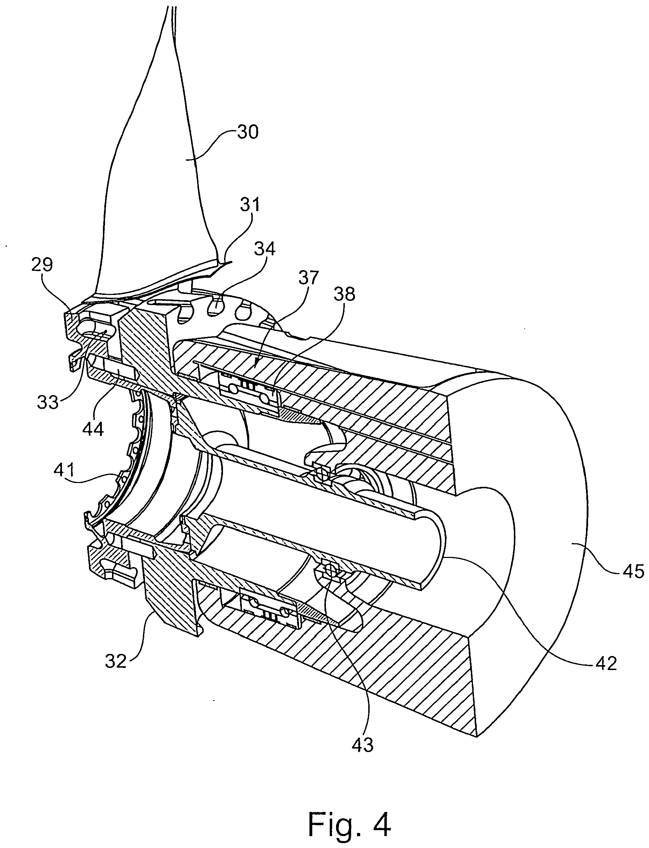

Die Fig. 4 zeigt eine perspektivische Darstellung eines ersten Ausführungsbeispiels. Die Nabe 29 ist fest mit einer um die Triebwerksachse 1 drehbaren Welle 42 verbunden und weist einen Lagerflansch 41 auf, an welchem ein Anströmkonus befestigbar ist. Die Lagerung der Welle 42 erfolgt über ein Lager 43.

Die Verstellscheibe 32 ist drehfest mit der Nabe 29 verbunden. Hierzu dienen Bolzen 44, welche in Ausnehmungen der Nabe 29 bzw. der Verstellscheibe 32 angeordnet sind. Die Verstellscheibe 32 ist mittels eines Lagers 38 an einem Lagergehäuse 45 gelagert. Dieses weist Zuführleitungen und Rückführleitungen für das Lageröl auf, so wie dies nachfolgend noch beschrieben werden wird.

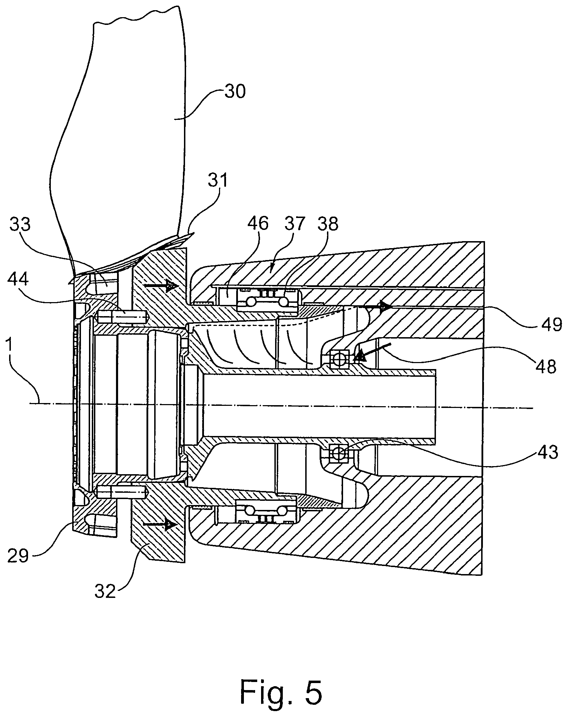

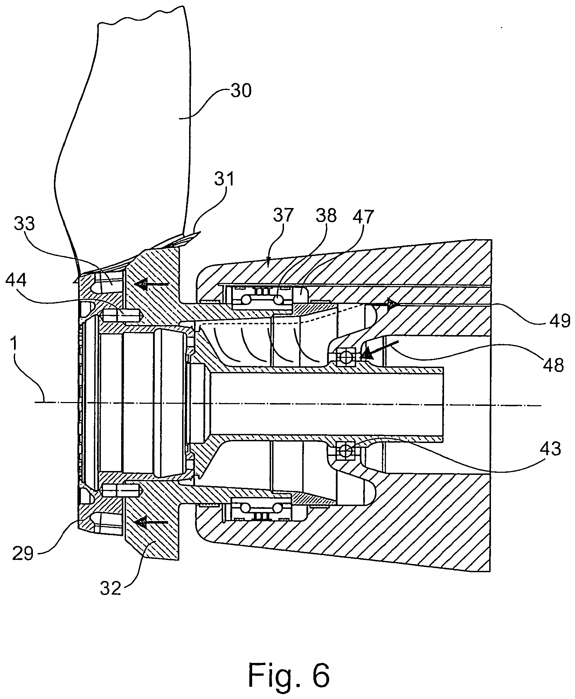

Die Fig. 5 und 6 zeigen zwei unterschiedliche Betriebszustände der in Fig. 4 gezeigten Anordnung. In Fig. 5 ist die Verstellscheibe 32 nach rechts verschoben, so wie dies durch die Pfeile dargestellt ist. Da das Lager 38 axialfest mit der Verstellscheibe 32 verbunden ist, bewirkt ein höherer Öldruck in einer Kammer 46 eine Verschiebung des Lagers 38 und damit der Verstellscheibe 32 nach rechts.

Die Bezugszeichen 48 und 49 bezeichnen eine Ölzufuhr bzw. ölrückfuhr zur Schmierung des Lagers 43.

Die Fig. 6 zeigt im Vergleich zur Fig. 5 einen Betriebszustand, bei welchem die Verstellscheibe 32 in ihre nach links gerichtete Position verschoben ist. Diese Verschiebung wird durch einen Druckaufbau in einer Kammer 47 der Kolben-Zylinder-Anordnung 37 bewirkt. Bei dem Ausführungsbeispiel sind beispielsweise die Kammern 46 und 47 jeweils mit Rückführleitungen verbunden, welche mit Absperrelementen oder Ventilen versehen sind, um die gewünschten Betriebszustände zu realisieren. Es ist jedoch auch möglich, die Kammern 46 und 47 jeweils mit separaten Lagerölzuführleitungen zu verbinden und diese entsprechend zu steuern, um die Kolben-Zylinder-Anordnung zu betätigen.

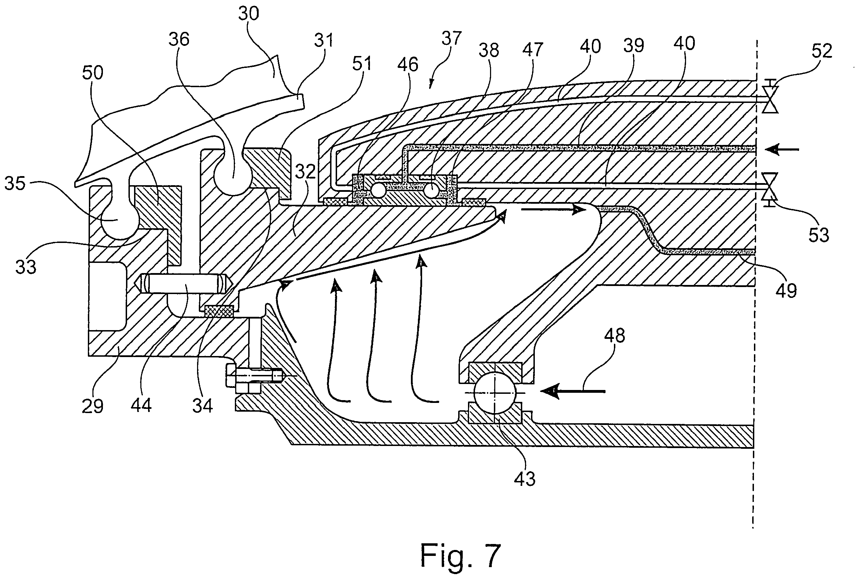

Bei dem in den Fig. 3 bis 6 gezeigten Ausführungsbeispiel weist der Schaufelfuß 31 jeweils ein erstes Lagerelement 35 und ein zweites Lagerelement 36 auf, welche in der ersten Führungsausnehmung/Führungsbahn 33 bzw. in der zweiten Führungsausnehmung/Führungsbahn 34 angeordnet ist. Die Figuren zeigen dies nicht im Einzelnen. Vielmehr ist die Ausgestaltung der Lagerelemente 35 und 36 detailliert in Fig. 7 gezeigt, jedoch auf die Ausführungsbeispiele der Fig. 3 bis 6 übertragbar.

Die Fig. 7 zeigt ein weiteres Ausführungsbeispiel der Erfindung. Zusätzlich zu der Verdeutlichung der Ausgestaltung der ersten und zweiten Lagerelemente 35 und 36 sind Verschlussringe 50 und 51 gezeigt, welche die Führungsausnehmungen 33 und 34 (Führungsbahnen) verschließen und die Lagerelemente 35 und 36 sichern. Diese sind als Kugelelemente ausgebildet, welche an einem im Durchmesser reduzierten Bereich an dem Schaufelfuß 31 gelagert sind. Entsprechend sind die Führungsbahnen 33 und 34 als hinterschnittene Bahnen ausgebildet.

Bei dem in Fig. 7 gezeigten Ausführungsbeispiel ist eine Lagerölzuführleitung 39 vorgesehen, welche in den zentrischen Bereich des Lagers 38 mündet. Die beiden Kammern 46 und 47 sind jeweils mit einer von zwei Lagerölrückführleitungen verbunden, in welchen Absperrelemente 52 und 53 angeordnet sind. Durch geeignete Betätigung der Absperrelemente 52 und 53 erfolgt somit eine Axialverschiebung der Verstellscheibe 32.

### Bezuqszeichenliste:

- 1: Triebwerksachse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Nabe
- 30: Fanschaufel
- 31: Schaufelfuß
- 32: Verstellscheibe
- 33: erste Führungsausnehmung/Führungsbahn
- 34: zweite Führungsausnehmung/Führungsbahn
- 35: Erstes Lagerelement
- 36: Zweites Lagerelement
- 37: Kolben-Zylinder-Anordnung
- 38: Lager
- 39: Lagerölzuführleitung
- 40: Lagerölrückführleitung
- 41: Lagerflansch
- 42: Welle
- 43: Lager
- 44: Bolzen
- 45: Lagergehäuse
- 46: Kammer
- 47: Kammer
- 48: Ölzufuhr
- 49: Ölrückfuhr
- 50: Verschlussring
- 51: Verschlussring
- 52: Absperrelement
- 53: Absperrelement

## Patentansprüche

1. Fluggasturbine mit einem um eine Triebwerksachse (1) drehbaren Fan (12) im Einströmbereich der Fluggasturbine, wobei der Fan (12) mehrere Fanschaufeln (30) aufweist, wobei jede Fanschaufel (30) mittels ihres Schaufelfußes (31) an einem in Strömungsrichtung vorderen Bereich bewegbar an einer um die Triebwerksachse (1) drehbaren Nabe (29) gelagert ist und wobei jede Fanschaufel (30) an einem in Strömungsrichtung hinteren Bereich bewegbar an einer axial zur Triebwerksachse (1) verschiebbaren, drehfest an der Nabe gelagerten Verstellscheibe (32) gelagert ist, wobei durch Axialbewegung der Verstellscheibe (32) der Anstellwinkel der Fanschaufeln (30) veränderbar ist,
wobei der Schaufelfuß (31) in Strömungsrichtung ein vorderes erstes Lagerelement (35), welches in einer ersten Führungsbahn (33) angeordnet ist, und ein hinteres zweites Lagerelement (36) umfasst, welches in einer zweiten Führungsbahn (34) angeordnet ist,
**dadurch gekennzeichnet, dass**
die Lagerelemente (35, 36) im Wesentlichen in Form hinterschnittener Kugelköpfe ausgebildet sind, welche in der als hinterschnittene Nuten ausgebildeten Führungsbahn (33, 34) verschiebbar und/oder bewegbar sind.

2. Fluggasturbine nach Anspruch 1, **dadurch gekennzeichnet, dass** die Nabe (29) mit ersten Führungsausnehmungen (33) und die Verstellscheibe (32) mit zweiten Führungsausnehmungen (34) versehen sind, an oder in denen jeweils ein Schaufelfuß (31) gelagert ist.

3. Fluggasturbine nach Anspruch 1 oder 2, **dadurch gekennzeichnet, dass** die Nabe (29) mit im Wesentlichen in Richtung der Triebwerksachse (1) angeordneten ersten Führungsbahnen (33) versehen ist und dass die Verstellscheibe (32) mit zur Triebwerksachse (1) geneigten zweiten Führungsbahnen (34) versehen ist, wobei jeder Schaufelfuß (31) jeweils in einer der ersten (33) und zweiten (34) Führungsbahn gelagert ist.

4. Fluggasturbine nach einem der Ansprüche 1 bis 3, **dadurch gekennzeichnet, dass** die Verstellscheibe (32) mittels einer Kolben-Zylinder-Anordnung (37) verschiebbar ist.

5. Fluggasturbine nach Anspruch 4, **dadurch gekennzeichnet, dass** die Kolben-Zylinder-Anordnung (37) durch zumindest ein Lager (38) gebildet ist, wobei zumindest eine Lagerölzuführleitung (39) und zumindest zwei Lagerölrückführleitungen (40) vorgesehen sind.

6. Fluggasturbine nach Anspruch 5, **dadurch gekennzeichnet, dass** das Lager (38) axial verschiebbar, einen doppelt wirkenden Kolben der Kolben-Zylinder-Anordnung (37) bildend, ausgebildet ist.

## Claims

1. Aircraft gas turbine having a fan (12) rotatable about an engine axis (1) in the inflow region of the aircraft gas turbine, with the fan (12) having several fan blades (30), with each fan blade (30) being moveably mounted on a hub (29) rotatable about the engine axis (1) by means of its blade root (31) on an area which is at the front in the flow direction, and with each fan blade (30) being moveably mounted on an area at the rear in the flow direction, on an adjusting disk (32) axially displaceable relative to the engine axis (1) and non-rotatably mounted on the hub, with the pitch angle of the fan blades (30) being variable by the axial movement of the adjusting disk (32), with the blade root (31) having in the flow direction a first front bearing element (35) arranged in a first guideway (33) and a second rear bearing element (36) arranged in a second guideway (34), **characterized in that** the bearing elements (35, 36) are designed substantially in the form of undercut spherical heads that can be displaced and/ or moved in the guideways (33, 34) designed in the form of undercut grooves.

2. Aircraft gas turbine in accordance with Claim 1, **characterized in that** the hub (29) is provided with first guide recesses (33) and that the adjusting disk (32) is provided with second guide recesses (34), on or in which a blade root (31) is mounted in each case.

3. Aircraft gas turbine in accordance with Claim 1 or 2, **characterized in that** the hub (29) is provided with first guideways (33) substantially arranged in the direction of the engine axis (1) and that the adjusting disk (32) is provided with second guideways (34) inclined towards the engine axis (1), with each blade root (31) being mounted in each case in one of the first (33) and the second (34) guideways.

4. Aircraft gas turbine in accordance with one of the Claims 1 to 3, **characterized in that** the adjusting disk (32) is moveable by means of a piston-cylinder arrangement (37).

5. Aircraft gas turbine in accordance with Claim 4, **characterized in that** the piston-cylinder arrangement (37) is formed by at least one bearing (38), with at least one bearing oil feed line (39) and at least two bearing oil return lines (40) being provided.

6. Aircraft gas turbine in accordance with Claim 5, **characterized in that** the bearing (38) is designed axially moveable, forming a double-acting piston of the piston-cylinder arrangement (37).

## Revendications

1. Turbine à gaz aéronautique avec une soufflante (12) tournant autour d'un axe du moteur (1) dans la zone d'afflux de la turbine à gaz aéronautique, sachant que la soufflante (12) présente plusieurs pales de soufflante (30), sachant que chaque pale de soufflante (30) est montée de manière mobile sur un moyeu (29) tournant autour de l'axe du moteur (1), au moyen de son pied de pale (31) sur une zone située à l'avant dans le sens d'écoulement, et sachant que chaque pale de soufflante (30) est montée de manière mobile sur une zone située à l'arrière dans le sens d'écoulement, sur un disque de réglage (32) déplaçable axialement par rapport à l'axe du moteur (1) et monté de manière solidaire en rotation sur le moyeu, sachant que l'angle d'attaque des pales de soufflante (30) est modifiable par le mouvement axial du disque de réglage (32), sachant que le pied de pale (31) comprend un premier élément avant de palier (35) dans le sens d'écoulement, qui est disposé dans une première voie de guidage (33) et un second élément arrière de palier (36), qui est disposé dans une seconde voie de guidage (34), **caractérisée en ce que** les éléments de palier (35, 36) sont conçus essentiellement sous forme de têtes sphériques contre-dépouillées qui sont décalables et/ ou déplaçables dans les voies de guidage (33, 34) conçues sous forme de rainures contre-dépouillées.

2. Turbine à gaz aéronautique selon la revendication n° 1, **caractérisée en ce que** le moyeu (29) est pourvu de premiers évidements de guidage (33) et le disque de réglage (32) est pourvu de seconds évidements de guidage (34) sur lesquels ou dans lesquels est monté respectivement un pied de pale (31).

3. Turbine à gaz aéronautique selon la revendication n° 1 ou n° 2, **caractérisée en ce que** le moyeu (29) est pourvu de premières voies de guidage (33) disposées essentiellement dans le sens de l'axe du moteur (1) et que le disque de réglage (32) est pourvu de secondes voies de guidage (34) inclinées en direction de l'axe du moteur (1), sachant que chaque pied de pale (31) est monté respectivement dans une desdites premières (33) et secondes (34) voies de guidage.

4. Turbine à gaz aéronautique selon une des revendications n° 1 à n° 3, **caractérisée en ce que** le disque de réglage (32) est déplaçable moyennant un agencement piston-cylindre (37).

5. Turbine à gaz aéronautique selon la revendication n° 4, **caractérisée en ce que** l'agencement piston-cylindre (37) est constitué d'au moins un palier (38), sachant que sont pourvues au moins une conduite d'alimentation en huile de palier (39) et au moins deux conduites de retour d'huile de palier (40).

6. Turbine à gaz aéronautique selon la revendication n° 5, **caractérisée en ce que** le palier (38) est conçu de manière à être déplaçable axialement, formant un piston à double effet de l'agencement piston-cylindre (37).
